# EUROPEAN PATENT APPLICATION

(11) **EP 4 825 918 A1**
(43) Date of publication of application: **21.10.2026**
(21) Application number: 25866558.7
(22) Date of filing: 12.09.2025
(51) Int. Cl.: C08L 67/04, C08L 67/02, C08L 101/16

(54) **RESIN COMPOSITION**

(30) Priority: 13.09.2024 KR 20240125901
(71) Applicant: LG Chem, Ltd., Seoul 07336 (KR)
(72) Inventor: CHO, Suhyun, Daejeon 34122 (KR); LEE, Yeonju, Daejeon 34122 (KR); CHOE, Dongcheol, Daejeon 34122 (KR); KIM, Chul Woong, Daejeon 34122 (KR); KO, Myung Joo, Daejeon 34122 (KR)
(74) Representative: Plasseraud IP
(86) International application number: PCT/KR2025/014273
(87) International publication number: WO 2026/059386

(57) **Abstract**

The resin composition of the present disclosure is biodegradable by including a biodegradable polymer and a biodegradable nucleating agent, and exhibits excellent productivity during processing such as injection molding, extrusion molding, and sheet extrusion due to a high crystallization rate.

## Description

### [Technical Field]

### Cross-reference to related application(s)

This application claims the benefit of priority based on Korean Patent Application No. 10-2024-0125901 filed on September 13, 2024, and Korean Patent Application No. 10-2025-0130650 filed on September 12, 2025, the entire contents of which are incorporated herein by reference.

The present disclosure relates to a resin composition that is biodegradable by including a biodegradable polymer and a biodegradable nucleating agent, and has excellent processability due to a high crystallization rate.

### [Background Art]

A biodegradable polymer is a polymer that is decomposed by the action of microorganisms upon landfilling, and is attracting attention as a material to replace petroleum-based plastic materials that do not decompose naturally.

However, biodegradable polymers such as polylactide have a disadvantage of poor processability due to low crystallinity, and thus a method of promoting crystallization by adding a nucleating agent is used to improve this.

Inorganic materials such as talc and boron nitride, and petroleum-based nucleating agents, etc., may be mentioned as conventional nucleating agents added to biodegradable resins. However, these nucleating agents have a problem of remaining even after the biodegradable resin is biodegraded because they are non-biodegradable, and in the case of petroleum-based nucleating agents, there is a disadvantage of causing environmental problems by generating microplastic.

### [Detailed Description of the Invention]

### [Technical Problem]

It is an object of the present disclosure to provide an eco-friendly resin composition that has a high crystallization rate, thus having excellent processability and exhibiting biodegradability.

### [Technical Solution]

There is provided a resin composition including a biodegradable polymer and a nucleating agent represented by the following Chemical Formula 1:

[Chemical Formula 1] R-[A-(B)n]ₖ

In Chemical Formula 1,
R is a trivalent or higher linking group derived from a multifunctional monomer,
A is a direct bond; or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 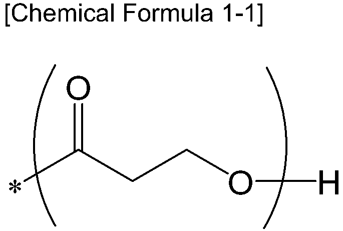 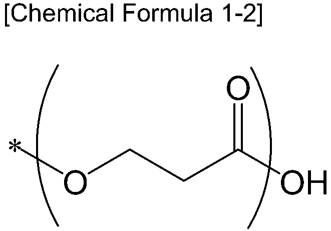
wherein,
* is a position connected to A,
k is an integer of 3 or more,
n is an integer of 1 to 700.

### [Advantageous Effects]

The resin composition of the present disclosure exhibits a fast crystallization rate and thus has excellent processability, and can be usefully used as an eco-friendly material because not only the polymer but also the nucleating agent exhibits biodegradability.

### [Brief Description of the Drawings]

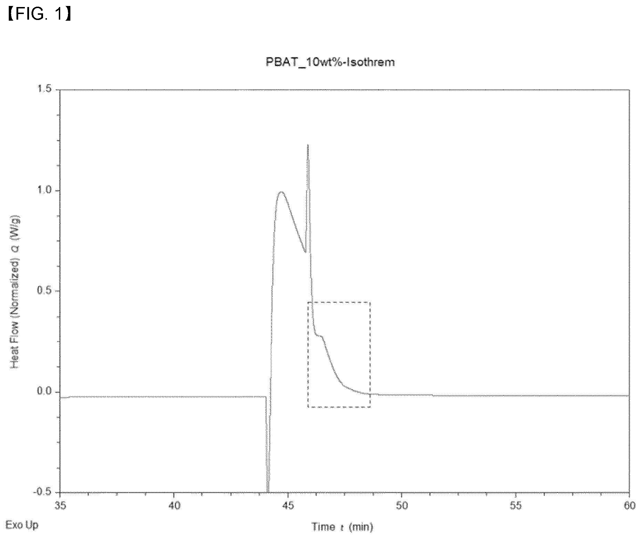

FIG. 1 is a result of the DSC isothermal crystallization experiment of Example 13.

### [Detailed Description of the Embodiments]

The terms used herein are only used to describe exemplary embodiments and are not intended to limit the invention. Expressions in the singular include plural expressions unless the context clearly indicates otherwise. In this specification, terms such as "comprise", "provide" or "have" are intended to designate that the implemented features, steps, components, or combinations thereof exist, and it should be understood that they do not preclude the possibility of existence or addition of one or more other features, steps, components, or combinations thereof in advance.

As the invention can be modified in various ways and can have various forms, specific embodiments will be exemplified and described in detail below. However, this is not intended to limit the invention to a specific disclosed form, and it should be understood to include all changes, equivalents, or substitutes included in the spirit and technical scope of the invention.

In the present disclosure, "biodegradable resin" or "biodegradable polymer" refers to a polymer that is decomposed by microorganisms into natural by-products such as water, carbon dioxide, nitrogen, biomass, and inorganic salts.

In the present disclosure, the term "substituted or unsubstituted" means being unsubstituted or substituted with one or more substituents selected from the group consisting of deuterium; a halogen group; a nitrile group; a nitro group; a hydroxyl group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of N, O and S atoms, or being unsubstituted or substituted with a substituent in which two or more substituents of the above-exemplified substituents are connected. For example, "a substituent in which two or more substituents are connected" may be a biphenyl group. Namely, a biphenyl group may be an aryl group, or it may also be interpreted as a substituent in which two phenyl groups are connected.

In the present disclosure, the carbon number of a carbonyl group is not particularly limited, but is preferably 1 to 40. Specifically, the carbonyl group may be a compound having the following structural formulae, but is not limited thereto.

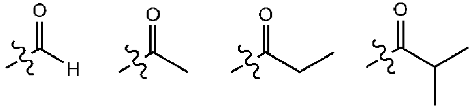

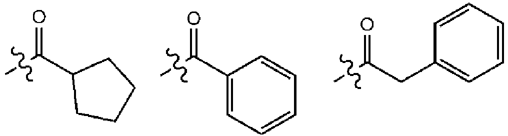

In the present disclosure, an ester group may have a structure in which oxygen of the ester group is substituted by a straight-chain, branched-chain, or cyclic alkyl group having 1 to 25 carbon atoms, or an aryl group having 6 to 25 carbon atoms. Specifically, the ester group may be a compound having the following structural formulae, but is not limited thereto.

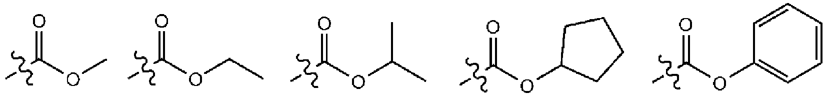

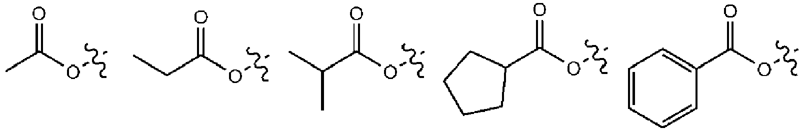

In the present disclosure, the carbon number of an imide group is not particularly limited, but is preferably 1 to 25. Specifically, the imide group may be a compound having the following structural formulae, but is not limited thereto.

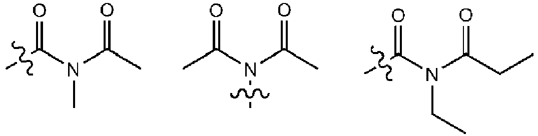

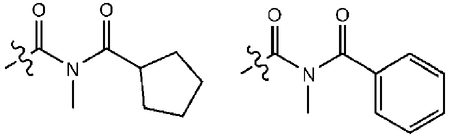

In the present disclosure, a silyl group specifically includes a trimethylsilyl group, a triethylsilyl group, a t-butyldimethylsilyl group, a vinyldimethylsilyl group, a propyldimethylsilyl group, a triphenylsilyl group, a diphenylsilyl group, a phenylsilyl group and the like, but is not limited thereto.

In the present disclosure, a boron group specifically includes a trimethylboron group, a triethylboron group, a t-butyldimethylboron group, a triphenylboron group, a phenylboron group, and the like, but is not limited thereto.

In the present disclosure, examples of a halogen group include fluorine, chlorine, bromine, or iodine.

In the present disclosure, the alkyl group may be straight-chain or branched-chain, and the number of carbon atoms is not particularly limited, but is preferably 1 to 40. According to one embodiment, the number of carbon atoms of the alkyl group is 1 to 20. According to another embodiment, the number of carbon atoms of the alkyl group is 1 to 10. According to another embodiment, the number of carbon atoms of the alkyl group is 1 to 6. Specific examples of the alkyl group include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethylpropyl, isohexyl, 4-methylhexyl, 5-methylhexyl, and the like, but are not limited thereto.

In the present disclosure, the alkenyl group may be straight-chain or branched-chain, and the number of carbon atoms is not particularly limited, but is preferably 2 to 40. According to one embodiment, the number of carbon atoms of the alkenyl group is 2 to 20. According to another embodiment, the number of carbon atoms of the alkenyl group is 2 to 10. According to another embodiment, the number of carbon atoms of the alkenyl group is 2 to 6. Specific examples include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group, and the like, but are not limited thereto.

In the present disclosure, the cycloalkyl group is not particularly limited, but preferably has 3 to 60 carbon atoms, and according to one embodiment, the number of carbon atoms of the cycloalkyl group is 3 to 30. According to another embodiment, the number of carbon atoms of the cycloalkyl group is 3 to 20. According to another embodiment, the number of carbon atoms of the cycloalkyl group is 3 to 6. Specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, and the like, but are not limited thereto.

In the present dislcosure, the aryl group is not particularly limited, but preferably has 6 to 60 carbon atoms, and may be a monocyclic aryl group or a polycyclic aryl group. According to one embodiment, the number of carbon atoms of the aryl group is 6 to 30. According to one embodiment, the number of carbon atoms of the aryl group is 6 to 20. The monocyclic aryl group may be a phenyl group, a biphenyl group, a terphenyl group, and the like, but is not limited thereto. The polycyclic aryl group may be a naphthyl group, an anthracenyl group, a phenanthryl group, a pyrenyl group, a perylenyl group, a chrysenyl group, a fluorenyl group, and the like, but is not limited thereto.

In the present dislcosure, the fluorenyl group may be substituted, and two substituents may bond with each other to form a spiro structure. When the fluorenyl group is substituted, 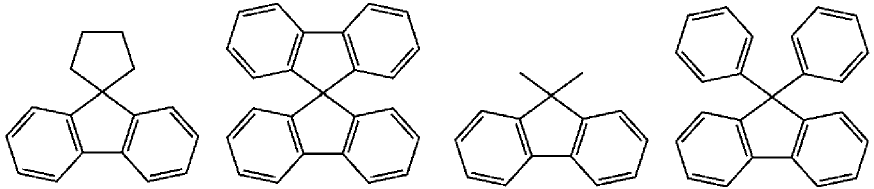 and the like can be formed. However, it is not limited thereto.

In the present dislcosure, the heteroaryl group is a heterocyclic group containing one or more of O, N, Si, and S as heteroatoms and having aromaticity, and the number of carbon atoms is not particularly limited, but is preferably 2 to 60. Examples of the heteroaryl group include a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyrido pyrimidinyl group, a pyrido pyrazinyl group, a pyrazino pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, a thiazolyl group, an isoxazolyl group, an oxadiazolyl group, a thiadiazolyl group, a benzothiazolyl group, a phenothiazinyl group, and a dibenzofuranyl group, and the like, but are not limited thereto.

In the present disclosure, the aryl group in the aralkyl group, aralkenyl group, alkylaryl group, and arylamine group is the same as the examples of the aryl group described above. In the present disclosure, the alkyl group in the aralkyl group, alkylaryl group, and alkylamine group is the same as the examples of the alkyl group described above. In the present disclosure, as for the heteroaryl in the heteroarylamine, the description regarding the heterocyclic group described above can be applied. In the present disclosure, the alkenyl group in the aralkenyl group is the same as the examples of the alkenyl group described above. In the present disclosure, as for the arylene, the description regarding the aryl group described above can be applied, except that it is a divalent group. In the present disclosure, as for the heteroarylene, the description regarding the heterocyclic group described above can be applied, except that it is a divalent group. In the present disclosure, as for the hydrocarbon ring, the description regarding the aryl group or the cycloalkyl group described above can be applied, except that it is not a monovalent group and is formed by the bonding of two substituents. In the present disclosure, as for the heterocycle, the description regarding the heterocyclic group described above can be applied, except that it is not a monovalent group and is formed by the bonding of two substituents.

The resin composition of the present disclosure includes a biodegradable polymer and a nucleating agent represented by the following Chemical Formula 1:

[Chemical Formula 1] R-[A-(B)n]ₖ

In Chemical Formula 1,
R is a trivalent or higher functional group derived from a multifunctional monomer,
A is a direct bond; or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 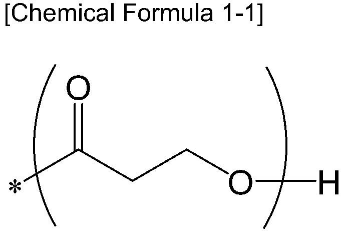 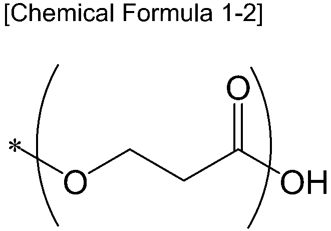
wherein,
* is a position connected to A,
k is an integer of 3 or more,
n is an integer of 1 to 700.

The type of the biodegradable polymer is not particularly limited, but may be, for example, one or more selected from the group consisting of polylactide (PLA); poly(butylene adipate-co-terephthalate) (PBAT); polybutylene succinate (PBS); polyhydroxyalkanoate (PHA) such as poly(3-hydroxypropionate) (P3HP), poly(3-hydroxybutyrate) (PHB), and the like; polylactate-co-3-hydroxypropionate (PLH); poly(3-hydroxypropionate)-b-polycaprolactone-b-polylactide (P3HP-b-PCL-b-PLA); and poly(3-hydroxypropionate)-b-(polycaprolactone-r-lactide) (P3HP-b-(PCL-r-LA)).

Preferably, the biodegradable polymer may be polylactide.

In one embodiment, the PLA may have a weight average molecular weight (Mw) of 150,000 g/mol or more, or 180,000 g/mol or more, or 200,000 g/mol or more, and 300,000 g/mol or less, or 260,000 g/mol or less.

In one embodiment, the PBAT may have a weight average molecular weight of 70,000 g/mol or more, 86,000 g/mol or more, or 92,000 g/mol or more, and 10,000 g/mol or less, or 98,000 g/mol or less, or 95,000 g/mol or less. Also, the PBAT may have a polydispersity index (PDI) of 2.3 or more, or 2.4 or more, and 2.6 or less.

In one embodiment, the PBS may have a weight average molecular weight of 70,000 g/mol or more, or 80,000 g/mol or more, or 84,000 g/mol or more, and 95,000 g/mol or less, or 87,000 g/mol. Also, the PBS may have a polydispersity index (PDI) of 1.6 or more, or 1.8 or more, and 2.0 or less, or 1.9 or less.

In one embodiment, the P3HP may have a weight average molecular weight of 49,000 g/mol or more, or 60,000 g/mol or more, or 70,000 g/mol or more, and 80,000 g/mol or less, or 79,000 g/mol or less. Also, the P3HP may have a polydispersity index (PDI) of 1.7 or more, or 1.9 or more, and 2.3 or less, or 2.1 or less.

In one embodiment, the PLH preferably used is one in which the content of poly(3-hydroxypropionate) is 5 wt% or more, or 10 wt% or more, or 15 wt% or more, or 25 wt% or more, and 40 wt% or less, 35 wt% or less, or 30 wt% or less. As such PLH, one having a weight average molecular weight of 25,000 g/mol or more, or 30,000 g/mol or more, and 140,000 g/mol or less, or 130,000 g/mol or less may be used.

More specifically, when the content of poly(3-hydroxypropionate) in PLH is 10 to 15 wt%, one having a weight average molecular weight of 93,000 g/mol to 130,000 g/mol and a polydispersity index (PDI) of 2.3 to 2.5 may be used.

In addition, when the content of poly(3-hydroxypropionate) in PLH is 25 to 30 wt%, one having a weight average molecular weight of 30,000 g/mol to 40,000 g/mol and a polydispersity index (PDI) of 2.0 to 2.2 may be used.

In one embodiment, the P3HP-b-PCL-b-PLA may have a weight average molecular weight of 30,000 g/mol or more, or 40,000 g/mol or more, or 50,000 g/mol or more, and 150,000 g/mol or less, or 130,000 g/mol or less, or 120,000 g/mol or less. Also, the P3HP-b-PCL-b-PLA may have a polydispersity index (PDI) of 2.7 or more, or 2.7 or more and 10.0 or less, or 9.0 or less. Also, in the P3HP-b-PCL-b-PLA, (sum of the weights of P3HP block and PCL block):(weight of PLA block) may be 5:95 to 30:80, or 10:90 to 20:80, and the weight ratio of P3HP block:PCL block may be 1:0.5 to 1:2, or 1:0.5 to 1:1. For example, the weight ratio of P3HP block:PCL block:PLA block may be 5:5:90 to 10:10:80.

In one embodiment, the P3HP-b-(PCL-r-LA) may have a weight average molecular weight of 70,000 g/mol or more, or 80,000 g/mol or more, or 90,000 g/mol or more, and 150,000 g/mol or less, or 130,000 g/mol or less, or 110,000 g/mol or less. Also, the P3HP-b-(PCL-r-LA) may have a polydispersity index (PDI) of 2.3 or more, or 2.5 or more, and 15 or less, or 13 or less. Also, in the P3HP-b-(PCL-r-LA), the weight ratio of P3HP block:PCL-r-LA block may be 5:95 to 30:70, or 10:90 to 20:80, and at this time, the weight ratio of caprolactone-derived repeating unit:lactide-derived repeating unit in the PCL-r-LA block may be 5:95 to 30:70, or 10:90 to 20:80.

The nucleating agent represented by Chemical Formula 1 exhibits biodegradability and serves to improve processability by increasing the crystallization rate of the biodegradable polymer.

Specifically, the resin composition including the biodegradable polymer and the nucleating agent represented by Chemical Formula 1 exhibits a half-crystallization time that is faster by 20% or more, or 40% or more, or 44% or more, or 50% or more, 55% or more, or 60% or more, compared to the biodegradable polymer itself which does not include the nucleating agent. Such a rate of increase (%) in half-crystallization time can be obtained by the formula (t₀-t₁)/t₀*100, where t₀ is the half-crystallization time of the biodegradable polymer and t₁ is the half-crystallization time of the resin composition. The upper limit of the rate of increase in half-crystallization time is not limited, but for example, it may be 95% or less, or 90% or less.

Accordingly, the resin composition including the nucleating agent represented by Chemical Formula 1 can improve productivity by exhibiting a shortened cycle time in processing steps such as injection molding, extrusion molding, and sheet extrusion.

The nucleating agent represented by Chemical Formula 1 is a branched poly(3-hydroxypropionic acid) copolymer which is a polymer of a multifunctional monomer having three or more of each functional group. That is, R in Chemical Formula 1 may be defined as a branched structure, and for example, the branched structure may be a structure such as 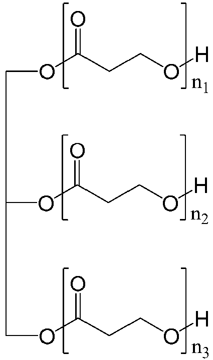 (wherein, n₁ to n₃ are each independently an integer of 1 to 700) or 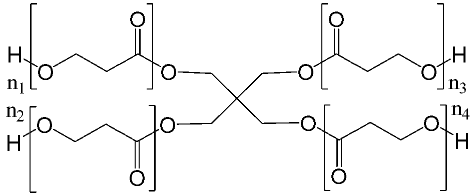 **(wherein,** n₁ to n₄ are each independently an integer of 1 to 700) or the like, but is not limited thereto.

In Chemical Formula 1, preferably, k is an integer of 3 or more, or 4 or more, and 10 or less, 9 or less, or 8 or less.

Preferably, R is a trivalent or higher, or tetravalent or higher linking group derived from substituted or unsubstituted C₁₋₆₀ alkyl, substituted or unsubstituted C₃₋₆₀ cycloalkyl, substituted or unsubstituted C₆₋₆₀ aryl, or substituted or unsubstituted C₂₋₆₀ heteroaryl containing one or more of N, O, and S, and at least one of the carbon atoms of the alkyl, cycloalkyl, aryl, and heteroaryl is substituted or unsubstituted with at least one heteroatom selected from the group consisting of N, O, and S, or carbonyl.

In one embodiment, R is a tetravalent, pentavalent, or hexavalent linking group derived from a multifunctional monomer, and k may be 4, 5, or 6, depending on R.

The nucleating agent represented by Chemical Formula 1 is a polymer in which 3-hydroxypropionic acid is condensation polymerization with a multifunctional monomer, or beta-propiolactone is ring-opening polymerization with a multifunctional monomer.

As the multifunctional monomer, there may be mentioned at least one selected from the group consisting of glycerol, pentaerythritol, 3-arm-poly(ethylene glycol) (number of ethylene glycol repeating units in each arm is 2 to 15), 4-arm-poly(ethylene glycol) (number of ethylene glycol repeating units in each arm is 2 to 10), di(trimethylolpropane), tripentaerythritol, xylitol, sorbitol, inositol, cholic acid, β-cyclodextrin, tetrahydroxyperylene, 2,2'-bis(hydroxymethyl)butyric acid (BHB), pyridinetetramine (PTA), diethylenetriaminepentaacetic acid, melamine, propane-1,2,3-triamine, tetraacetylenepentaamine, benzene-1,3,5-triamine, toluene-2,4,6-triisocyanate, 2-isocyanatoethyl-2,6-diisocyanatocaproate, triphenylmethane-4,4,4-triisocyanate, trimethylolpropane, triethanolamine, triglycidyl, and s-triazine-1,3,5-triethanol ether.

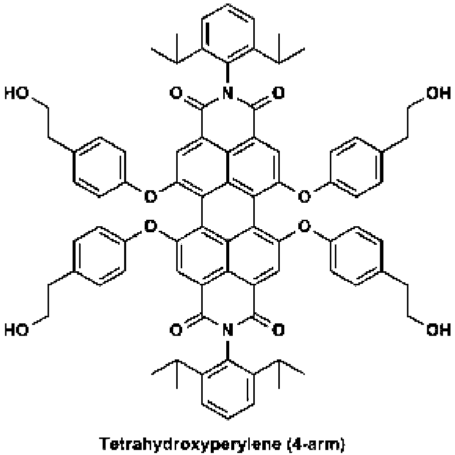

In one embodiment, the multifunctional monomer may be one or more selected from the group consisting of pentaerythritol, 4-arm-poly(ethylene glycol) (number of ethylene glycol repeating units in each arm is 2 to 10), tripentaerythritol, xylitol, sorbitol, and inositol.

In one embodiment, the multifunctional monomer may be pentaerythritol.

The nucleating agent may be one in which 0.1 mol% to 20 mol% of the multifunctional monomer is condensation polymerization with respect to each content of 3-hydroxypropionic acid or beta-propiolactone, and preferably, the multifunctional monomer content may be used at 0.1 mol% to 15 mol%, 0.5 mol% to 10 mol%, or 1 mol% to 8 mol%, or 0.1 mol% or more, 0.5 mol% or more, or 1.0 mol% or more, or 15 mol% or less, 10 mol% or less, or 8 mol% or less.

Meanwhile, in the nucleating agent represented by Chemical Formula 1, a comonomer may be additionally polymerized to a terminal functional group included inside.

The terminal functional group is derived from the multifunctional monomer, 3-hydroxypropionic acid, or beta-propiolactone used during the preparation of the branched poly(3-hydroxypropionic acid) polymer represented by Chemical Formula 1, and means a terminal functional group (for example, -OH, -COOH) capable of additional polymerization reaction.

In addition, the type of the comonomer to be copolymerized is not particularly limited as long as it is a monomer capable of reacting with the terminal functional group described above, and for example, it may be an ester-based comonomer. Specifically, glycolate, lactic acid, hydroxybutyrate, hydroxyvalerate, hydroxypentanoate, hydroxyoctanoate, lactone-based compounds, etc., may be used, but are not limited thereto.

The nucleating agent may have a weight average molecular weight (Mw, g/mol) of 1,000 or more, 1,500 or more, 1,900 or more, 2,000 or more, or 2,500 or more, and 100,000 or less, 80,000 or less, 50,000 or less, 40,000 or less, 35,000 or less, or 20,000 or less.

The nucleating agent may have a number average molecular weight (Mn, g/mol) of 500 or more, 700 or more, 1,000 or more, 1,200 or more, 1,800 or more, or 2,000 or more, and 50,000 or less, 30,000 or less, 20,000 or less, 10,000 or less, 9,500 or less, or 8,000 or less.

The nucleating agent may have a polydispersity index (PDI) of 1.0 to 13.0, and may be 1.1 or more, 1.2 or more, or 1.3 or more, or 14.0 or less, 13.5 or less, 12.0 or less, 11.0 or less, or 10.0 or less.

The method for measuring the weight average molecular weight, number average molecular weight, and polydispersity index will be described in detail in the Experimental Examples section to be described later.

The nucleating agent represented by Chemical Formula 1 may be prepared according to a preparation method including, for example, a step of polymerizing 3-hydroxypropionic acid or beta-propiolactone with the above-described multifunctional monomer.

When the nucleating agent represented by Chemical Formula 1 is prepared by condensation polymerization of 3-hydroxypropionic acid and a multifunctional monomer, the multifunctional monomer may be included in an amount of 0.1 mol% to 20 mol% with respect to the content of the 3-hydroxypropionic acid. When polymerized in the above content range, it is suitable for forming a desired branched structure with an appropriate crosslinked structure in an excellent yield. When the multifunctional monomer is less than 0.1 mol%, it is difficult to form the desired crosslinked structure, and when it exceeds 20 mol%, crosslinking occurs in a relatively low molecular weight oligomer form, making it difficult to obtain a high molecular weight polymer and causing a problem of reduced process efficiency due to a long reaction time. Preferably, the multifunctional monomer content may be used at 0.1 mol% to 15 mol%, 0.5 mol% to 10 mol%, or 1 mol% to 8 mol%, or 0.1 mol% or more, 0.5 mol% or more, or 1.0 mol% or more, or 15 mol% or less, 10 mol% or less, or 8 mol% or less. In this case, the polymer can be formed without the aforementioned problems.

In addition, when the nucleating agent represented by Chemical Formula 1 is prepared by ring-opening polymerization of beta-propiolactone and a multifunctional monomer, the multifunctional monomer may be included in an amount of 0.1 mol% to 20 mol% with respect to the content of the beta-propiolactone. When polymerized in the above content range, it is suitable for forming a desired branched structure with an appropriate crosslinked structure in an excellent yield. When the multifunctional monomer is less than 0.1 mol%, it is difficult to form the desired crosslinked structure, and when it exceeds 20 mol%, crosslinking occurs in a relatively low molecular weight oligomer form, making it difficult to obtain a high molecular weight polymer and causing a problem of reduced process efficiency due to a long reaction time. Preferably, the multifunctional monomer content may be used at 0.1 mol% to 15 mol%, 0.5 mol% to 10 mol%, or 1 mol% to 8 mol%, or 0.1 mol% or more, 0.5 mol% or more, or 1.0 mol% or more, or 15 mol% or less, 10 mol% or less, or 8 mol% or less. In this case, the polymer can be formed without the aforementioned problems.

The polymerization may be carried out in the presence of a sulfonic acid-based catalyst and a tin-based catalyst. The catalyst has the effect of promoting the polymerization of each of 3-hydroxypropionic acid and beta-propiolactone and at the same time inhibiting the generation of cyclic oligomers during the polymerization process.

Preferably, the sulfonic acid-based catalyst is p-toluenesulfonic acid, m-xylene-4-sulfonic acid, 2-mesitylenesulfonic acid, or p-xylene-2-sulfonic acid. Also, preferably, the tin-based catalyst is SnCl₂ or Sn(oct)₂.

Preferably, the sulfonic acid-based catalyst is used in an amount of 0.001 mol% to 1 mol% relative to 3-hydroxypropionic acid and beta-propiolactone, respectively. In the above range, polymerization can be promoted and the generation of cyclic oligomers can be suppressed at the same time. Preferably, the content of the sulfonic acid-based catalyst may be 0.01 mol% to 0.8 mol%, or 0.02 mol% to 0.5 mol%, or 0.01 mol% or more, or 0.02 mol% or more, or 0.8 mol% or less, or 0.5 mol% or less.

Preferably, the tin-based catalyst is used in an amount of 0.00025 mol% to 1 mol% relative to 3-hydroxypropionic acid and beta-propiolactone, respectively. In the above range, polymerization can be promoted and the generation of cyclic oligomers can be suppressed at the same time. Preferably, the tin-based catalyst may be 0.001 mol% to 0.8 mol%, 0.005 to 0.5 mol%, or 0.01 to 0.3 mol%, or 0.001 mol% or more, 0.005 mol% or more, or 0.01 mol% or more, or 0.8 mol% or less, 0.5 mol% or less, or 0.3 mol% or less.

The polymerization may be performed by reacting at 80°C to 100°C and 8 mbar to 12 mbar for 110 minutes to 130 minutes, and then reacting for 4 hours to 26 hours under a vacuum condition of 10⁻² torr. When melt-polymerized under the above conditions, the generation of by-products of side reactions can be suppressed.

More specifically, an oligomerization reaction is performed at 80°C to 100°C and 8 mbar to 12 mbar for 110 minutes to 130 minutes, and then the reaction is proceeded for 4 hours to 26 hours under a vacuum condition of 10⁻² torr to form the polymer of Chemical Formula 1.

The subsequent polymerization may be performed at the same temperature as the oligomerization reaction, or may be performed by raising the temperature to 100°C to 120°C.

Preferably, after performing the reaction at about 90±3°C and about 10±1 mbar for about 120±5 minutes, the temperature is raised to the same temperature or about 110±3°C and the reaction is performed under a vacuum condition of about 10⁻² torr. For reference, the reaction after oligomerization can be appropriately adjusted according to the content range of the multifunctional monomer used, and if an excessive amount of multifunctional monomer is used, the reaction time may be lengthened and chain transfer may occur as a side reaction, leading to a gelation phenomenon, so it can be performed by appropriately adjusting it within about 24 hours.

Meanwhile, the 3-hydroxypropionic acid, beta-propiolactone, and multifunctional monomer may be pretreated at 30°C to 100°C and 30 mbar to 150 mbar before polymerization, respectively, as necessary. Through the pretreatment step, moisture present in the 3-hydroxypropionic acid and the multifunctional monomer can be removed.

The nucleating agent represented by Chemical Formula 1 may be included in an amount of 0.1 to 10 parts by weight based on 100 parts by weight of the biodegradable polymer, or 0.5 parts by weight or more, or 1 part by weight or more, and 10 parts by weight or less, or 8 parts by weight or less, or 5 parts by weight or less. When the content of the nucleating agent satisfies the above range, the resin composition can have uniform physical properties and significantly improve the crystallization rate of the biodegradable polymer, thereby improving processability.

Meanwhile, the resin composition may include additional additives such as an antioxidant, if necessary, in addition to the biodegradable polymer and the nucleating agent represented by Chemical Formula 1. As the antioxidant, for example, bis(2,4-di-t-butylphenyl) pentaerythritol diphosphite (Songwon Industrial, SONGNOX^{®} 6260), which is a phosphorus-based antioxidant, may be used. When the antioxidant is included, its content can be adjusted as necessary, and for example, it may be included in an amount of 0.1 parts by weight or more, or 0.2 parts by weight or more, and 0.5 parts by weight or less, or 0.4 parts by weight or less, or 0.3 parts by weight or less based on 100 parts by weight of the biodegradable polymer.

Hereinafter, embodiments of the present disclosure will be described in more detail in the following examples. However, the following examples are merely to illustrate the embodiments of the present disclosure, and the contents of the present disclosure are not limited by the following examples.

### <Preparation Examples and Comparative Preparation Examples: Preparation of nucleating agents>

### Preparation Example 1

3-hydroxypropionic acid (3HP) dissolved in water and glycerol were placed in an RBF, and moisture was dried at 90°C and 100 torr for 2 hours.

70 g of dried 3-hydroxypropionic acid (3HP), 3.578 (5 mol% relative to 3HP) of glycerol, and 295.6 mg of p-TSA (0.2 mol% relative to 3HP) as a catalyst were placed in a reactor, and an oligomerization reaction was performed at 90°C and 10 mbar for 2 hours. Polymerization was performed for 5 hours by adjusting the vacuum degree to 0.1 torr, and then Sn(Oct)₂ was added at 0.05 mol% relative to 3HP as a co-catalyst, and then an additional polymerization reaction was carried out for 24 hours to prepare a branched poly(3-hydroxypropionic acid) copolymer.

### Preparation Example 2

87.31 g of 3HP, 1.32 g of pentaerythritol (PTEA) (1 mol% relative to 3HP), and 184 mg of p-TSA (0.1 mol% relative to 3HP) as a catalyst were added into a 3-neck round flask and prepared.

The heating block was set to 90°C and the overhead stirrer was set to 300 rpm to stir while the pressure was reduced step by step to remove moisture at 0.1 torr for 2 hours, and then condensation polymerization was proceeded for 24 hours while maintaining the same pressure, temperature, and stirring speed to prepare a branched poly(3-hydroxypropionic acid) copolymer.

### Preparation Example 3

87.31 g of 3HP, 6.598 g of pentaerythritol (PTEA) (5 mol% relative to 3HP), and 184 mg of p-TSA (0.1 mol% relative to 3HP) as a catalyst were added into a 3-neck round flask and prepared.

The heating block was set to 90°C and the overhead stirrer was set to 300 rpm to stir while the pressure was reduced step by step to remove moisture at 0.1 torr for 2 hours, and then condensation polymerization was proceeded for 24 hours while maintaining the same pressure, temperature, and stirring speed to prepare a branched poly(3-hydroxypropionic acid) copolymer.

### Preparation Example 4

74.62 g of 3HP, 0.5112 g of glycerol (1 mol% relative to 3HP), and 211 mg of p-TSA (0.2 mol% relative to 3HP) as a catalyst were added into a 3-neck round flask and prepared.

The heating block was set to 90°C and the overhead stirrer was set to 300 rpm to stir while the pressure was reduced step by step to remove moisture at 0.1 torr for 2 hours, and then condensation polymerization was proceeded for 15 hours while maintaining the same pressure, temperature, and stirring speed to prepare a branched poly(3-hydroxypropionic acid) copolymer.

### Comparative Preparation Example 1

3-hydroxypropionic acid (3HP) dissolved in water was placed in an RBF, and moisture was dried at 90°C and 100 torr for 2 hours.

60 g of dried 3-hydroxypropionic acid (3HP) was placed in a reactor, and an oligomerization reaction was performed at 90°C and 10 mbar for 2 hours using 295.6 mg of p-TSA (0.2 mol% relative to 3HP) as a catalyst. Polymerization was performed for 5 hours by adjusting the vacuum degree to 0.1 torr, and then Sn(Oct)₂ was added at 0.05 mol% relative to 3HP as a co-catalyst, and then an additional polymerization reaction was carried out for 24 hours to prepare a linear poly(3-hydroxypropionic acid) polymer.

### GPC (gel permeation chromatography) molecular weight evaluation

GPC analysis of the polymers of Preparation Examples 1 to 4 and Comparative Preparation Example 1 was performed using equipment of Water e2695 model and Agilent Plgel mixed c and b columns.

The sample was prepared at 4 mg/ml using chloroform as a solvent and 20 ul was injected. The weight average molecular weight, number average molecular weight, and polydispersity index were measured with the measured gel permeation chromatography (GPC: gel permeation chromatography, Tosoh ECO SEC Elite).
Solvent: chloroform (eluent)
Flow rate: 1.0 ml/min
Column temperature: 40°C
Standard: Polystyrene (calibrated with a cubic function)

**[Table 1]**

| | Mn | Mw | PDI |
|---|---|---|---|
| Preparation Example 1 | 2,525 | 33,778 | 13.38 |
| Preparation Example 2 | 7,600 | 10,995 | 1.44 |
| Preparation Example 3 | 2,263 | 2,955 | 1.3 |
| Preparation Example 4 | 9,054 | 16,054 | 1.77 |
| Comparative Preparation Example 1 | 16,197 | 33,663 | 2.08 |

### <Examples and Comparative Examples: Preparation of resin compositions>

### Examples 1 to 30 and Comparative Examples 1 to 9

Using a compact extruder (Thermo Scientific Haake Mini CTW Mini Jet Combination) and a twin screw, biodegradable polymer and nucleating agent were mixed in the compositions shown in Tables 2 and 3 below to prepare resin compositions of each Example and Comparative Example.

In Tables 2 and 3 below, the content of the nucleating agent is expressed in parts by weight (wt%) based on 100 parts by weight of the biodegradable polymer. When only a number is written in the "Content of nucleating agent" column of Tables 2 and 3, it means that the nucleating agent of Preparation Example 1 was used in that content. In cases where a nucleating agent other than Preparation Example 1 was used, the nucleating agent used was described below the nucleating agent content value.

Each resin composition was prepared by the following method. The biodegradable polymer and nucleating agent were put into the extruder, the discharge port was blocked, and then mixed at a temperature of 90 to 190°C (P3HP 90°C; PBS 130°C; PLA 190°C; PBAT 150°C; PLH 10% and PLH 30% 190°C) at 60 rpm. After mixing for 3 minutes, it was discharged to obtain a resin composition.

The biodegradable polymers used for preparing the resin compositions of each Example and Comparative Example are as follows. The units of Mn and Mw below are g/mol.
P3HP: 3-hydroxypropionic acid was put into a reactor and dried at 50°C and 30 mbar for 5 hours to completely remove moisture. To the moisture-removed 3-hydroxypropionic acid (15 g), p-TSA (p-Toluenesulfonic acid) and 1,4-butanediol were added at 0.2 mol% and 1 mol% relative to 3-hydroxypropionic acid, respectively. The temperature and pressure in the reactor were maintained at 90°C and 10 mbar, respectively, and reacted for 2 hours to prepare 3-hydroxypropionic acid oligomers. Subsequently, the temperature and pressure in the reactor were adjusted to 110°C and 0.3 mbar, respectively, and reacted for 6 hours to prepare poly(3-hydroxypropionate) (Mn 35311, Mw 75536, PDI 2.14).
P3HP-b-(PCL-r-LA): Prepared by putting 16 g of lactide, 2 g of poly(3-hydroxypropionate), and 4 g of caprolactone into a reactor and polymerizing at 180°C under nitrogen conditions for 90 minutes.
P3HP-b-PCL-b-PLA: Prepared by putting 16 g of lactide and 2 g of poly(3-hydroxypropionate) into a reactor and polymerizing at 180°C under nitrogen conditions for 20 minutes, then additionally adding 4 g of caprolactone and polymerizing at 180°C under nitrogen conditions for 20 minutes.
PBS: Sigma-Aldrich (Mn 46809, Mw 84182, PDI 1.8)
PBAT: ANKOR Bioplastics, BG1070 (Mn 38660, Mw 97618, PDI 2.53)
PLH 10%: Prepared by ring-opening polymerization for 90 minutes at 180°C in a nitrogen atmosphere by adding 10 wt% of poly(3-hydroxypropionate) relative to lactide (Mn 42721, Mw 101768, PDI 2.38).
PLH 30%: Prepared by ring-opening polymerization for 90 minutes at 180°C in a nitrogen atmosphere by adding 30 wt% of poly(3-hydroxypropionate) relative to lactide (Mn 29309, Mw 69265, PDI 2.36).
PLA: Totalenergies corbion, Luminy^{®} LX175 (Mn 124544, Mw 235402, PDI 1.89)

### Experimental Example 1: DSC (differential scanning calorimetry) non-isothermal crystallization experiment

The crystallization temperature (Tc, 1st cooling result), glass transition temperature (Tg), cold crystallization temperature (Tcc, 2nd heating result) and enthalpy, and melting temperature (Tm) were obtained by measuring under the following conditions in a nitrogen gas flow state using a TA DSC250 model equipment.
1) Raising temperature from 30°C to 190°C at 10°C/min (1st heating) / maintaining temperature at 190°C for 10 minutes
2) Cooling from 190°C to -60°C at 10°C/min (1st cooling) / maintaining temperature at -60°C for 10 minutes
3) Raising temperature from -60°C to 190°C at 10°C/min (2nd heating)

### Experimental Example 2: DSC isothermal crystallization experiment

Half-crystallization time was obtained by measuring under the following conditions in a nitrogen gas flow state using a TA DSC250 model equipment.
1) Raising temperature from 30°C to 190°C at 10°C/min (1st heating) / maintaining temperature at 190°C for 10 minutes
2) According to the biodegradable polymer included in the resin composition, isotherm measurement was carried out for 100 minutes by cooling to each of the temperatures described below
   P3HP-b-PCL-b-PLA: 80°C
   P3HP-b-(PCL-r-LA): 80°C
   P3HP: 40°C
   PBS: 40°C
   PBAT: 90°C
   PLH 10%: 90°C
   PLH 30%: 70°C
   PLA: 110°C
   Preparation Example 1: 30°C

**[Table 2]**

| | Biodegrada ble polymer | Content of nucleati ng agent (wt%) | Tc | | Tg | Tcc | |
|---|---|---|---|---|---|---|---|
| | | | Temp. (°C) | Δ H (J/g) | Temp. (°C) | Temp. (°C) | Δ H (J/g) |
| Preparation Example 1 | - | 100 | - | - | -24.03 | 25.79 | 27.844 |
| Comparative Example 1 | P3HP-b-PCL-b-PLA | 0 | N.D | N.D | 24.5 | 92.9 | 16.8 |
| Example 1 | | 10 | 76.80 | 5.10 | 11.00 | 74.50 | 11.50 |
| Comparative Example 2 | P3HP-b-(PCL-r-LA) | 0 | N.D | N.D | 36.10 | 95.80 | 24.20 |
| Example 2 | | 10 | 79.60 | 15.80 | 11.50 | 68.40 | 2.60 |
| Comparative Example 3 | P3HP | 0 | 17.44 | 15.02 | -21.96 | 24.15 | 33.79 |
| Example 3 | | 0.5 | 25.97 | 47.70 | -21.41 | - | - |
| Example 4 | | 1 | 31.12 | 49.04 | -20.68 | N.D. | N.D. |
| Example 5 | | 5 | 31.30 | 50.80 | -20.28 | N.D. | N.D. |
| Example 6 | | 10 | 29.30 | 47.71 | -20.82 | N.D. | N.D. |
| Comparative Example 4 | PBS | 0 | 39.20 | 4.20 | -10.60 | 42.50 | 40.50 |
| Example 7 | | 0.5 | 37.42 | 14.88 | -10.74 | 32.36 | 21.49 |
| Example 8 | | 1 | 39.21 | 33.41 | -10.52 | 33.11 | 10.44 |
| Example 9 | | 5 | 37.56 | 24.53 | -11.09 | 33.62 | 16.84 |
| Example 10 | | 10 | 43.28 | 6.93 | -11.10 | 32.93 | 31.39 |
| Comparative Example 5 | PBAT | 0 | 83.07 | 19.17 | -32.57 | - | - |
| Example 11 | | 0.5 | 94.29 | 13.98 | -33.16 | - | - |
| Example 12 | | 1 | 92.42 | 15.14 | -32.97 | - | - |
| Example 13 | | 5 | 91.25 | 15.92 | -33.52 | - | - |
| Example 14 | | 10 | 93.25 | 14.66 | -34.73 | - | - |
| Comparative Example 6 | PLH 2L 63(10%) | 0 | 86.87 | 1.90 | 46.16 | 87.93 | 24.90 |
| Example 15 | | 0.5 | 90.82 | 8.89 | 45.11 | 84.15 | 17.23 |
| Example 16 | | 1 | 86.43 | 2.26 | 42.52 | 81.73 | 21.16 |
| Example 17 | | 5 | 86,82 | 3.04 | 42.26 | 81.14 | 18.90 |
| Example 18 | | 10 | 88.40 | 4.19 | 43.68 | 82.31 | 22.02 |
| Comparative Example 7 | PLH30% | 0 | 70.04 | 4.25 | 30.85 | 72.96 | 8.35 |
| Example 19 | | 0.5 | 88.07 | 24.91 | -23.87 | 13.55 | 0.79 |
| Example 20 | | 1 | 87.48 | 24.46 | -24.40 | 15.47 | 0.80 |
| Example2 1 | | 1 (Preparation Example 2) | 88.74 | 26.21 | -21.94 | 21.63 | 2.65 |
| Example 22 | | 1 (Preparation Example 3) | 88.26 | 25.11 | -24.49 | 18.38 | 0.90 |
| Example 23 | | 1 (Preparation Example 4) | 87.03 | 25.92 | -24.36 | 15.85 | 0.42 |
| Example 24 | | 5 | 87.16 | 25.09 | -23.66 | 18.16 | 1.86 |
| Example 25 | | 10 | 88.82 | 25.30 | -22.60 | 20.63 | 2.19 |
| Comparative Example 8 | PLA | 0 | - | - | 58.26 | 130.59 | 1.15 |
| Example 26 | | 0.5 | - | - | 57.42 | 114.72 | 29.01 |
| Comparative Example 9 | PLA | 0.5 (Comparative Preparation Example 1) | - | - | 58.02 | 109.06 | 24.92 |

**[Table 3]**

| | Biodegradable polymer | Content of nucleating agent (wt%) | Tm | | Half-crystallization | |
|---|---|---|---|---|---|---|
| | | | Temp.(°C) | Δ H (J/g) | Δ H (J/g) | Time(min.) |
| Preparation Example 1 | - | 100 | 56.63 | 28.211 | 28.249 | 0.64 |
| Comparative Example 1 | P3HP-b-PCL-b-PLA | 0 | 149 | 21.2 | - | - |
| Example 1 | | 10 | 145.10 | 23.00 | 17.50 | 2.00 |
| Comparative Example 2 | P3HP-b-(PCL-r-LA) | 0 | 159.60 | 27.10 | 17.50 | 1.60 |
| Example 2 | | 10 | 148.20 | 21.00 | 13.90 | 0.80 |
| Comparative Example 3 | P3HP | 0 | 69.52 | 48.88 | 56.20 | 13.61 |
| Example 3 | | 0.5 | 69.54 | 51.26 | 51.69 | 3.84 |
| Example 4 | | 1 | 69.97 | 49.10 | 55.30 | 2.58 |
| Example 5 | | 5 | 69.73 | 50.86 | 55.93 | 2.65 |
| Example 6 | | 10 | 69.35 | 47.19 | 46.86 | 3.07 |
| Comparative Example 4 | PBS | 0 | 102.50 | 61.30 | 58.60 | 8.52 |
| Example 7 | | 0.5 | 103.41 | 57.31 | 43.95 | 3.43 |
| Example 8 | | 1 | 103.66 | 65.10 | 46.86 | 2.68 |
| Example 9 | | 5 | 103.27 | 64.13 | 48.896 | 2.46 |
| Example 10 | | 10 | 103.36 | 60.548 | 52.274 | 6.79 |
| Comparative Example 5 | PBAT | 0 | 128.65 | 13.47 | 3.76 | 8.60 |
| Example 11 | | 0.5 | 131.55 | 8.83 | 3.74 | 0.50 |
| Example 12 | | 1 | 131.05 | 9.94 | 4.89 | 0.60 |
| Example 13 | | 5 | 130.69 | 10.35 | Immeasurable | Immeasurable |
| Example 14 | | 10 | 130.73 | 9.64 | Immeasurable | Immeasurable |
| Comparative Example 6 | PLH 2L 63(10%) | 0 | 167.89 | 44.59 | 47.93 | 8.65 |
| Example 15 | | 0.5 | 167.88 | 48.84 | 40.08 | 4.78 |
| Example 16 | | 1 | 166.67 | 47.04 | 27.97 | 4.98 |
| Example 17 | | 5 | 167.15 | 47.14 | 29.51 | 3.58 |
| Example 18 | | 10 | 168.07 | 53.78 | 31.14 | 3.33 |
| Comparative Example 7 | PLH30% | 0 | 164.78 | 36.94 | 26.83 | 4.55 |
| Example 19 | | 0.5 | 162.88 | 33.75 | 26.35 | 2.65 |
| Example 20 | | 1 | 161.88 | 31.07 | 26.28 | 2.28 |
| Example 21 | | 1 (Prepara tion Example 2) | 161.15 | 27.39 | 20.05 | 1.49 |
| Example 22 | | 1 (Preparation Example 3) | 161.35 | 30.11 | 16.97 | 1.69 |
| Example 23 | | 1 (Preparation Example 4) | 161.30 | 32.82 | 22.63 | 2.43 |
| Example 24 | | 5 | 161.27 | 29.49 | 24.01 | 2.31 |
| Example 25 | | 10 | 161.41 | 26.67 | 22.96 | 1.56 |
| Comparative Example 8 | PLA | 0 | 153.59 | 1.39 | 29.84 | 174.10 |
| Example 26 | | 0.5 | 150.21 | 26.99 | 28.21 | 9.12 |
| Comparative Example 9 | PLA | 0.5 (Comparative Preparation Example 1) | 148.87 | 29.31 | 32.82 | 27.43 |

| | | | | | | |
|---|---|---|---|---|---|---|
| * N.D.: Not detected | | | | | | |

Generally, if the crystallization rate of the resin composition is fast, the enthalpy of Tc is large, cold crystallization is little or absent, and the half-crystallization time is short.

Referring to Tables 2 and 3 above, the resin compositions of Examples 1 to 26 including the nucleating agents of Preparation Examples 1 to 4 all had Tc confirmed, and compared to each biodegradable polymer, the Tc enthalpy value appeared larger, and the temperature and enthalpy value of Tcc were confirmed to be lower. In addition, it was confirmed that the resin compositions of the Examples had a significantly shorter half-crystallization time compared to each biodegradable polymer. In particular, for Example 13, as shown in FIG. 1, the crystallization rate was so fast that peak separation with the analytical equipment was impossible, so the accurate half-crystallization time could not be measured. For Example 14, measurement of the half-crystallization time was also impossible for the same reason.

Meanwhile, in the case of Comparative Example 9 using the nucleating agent of Comparative Preparation Example 1, which does not satisfy the structure of Chemical Formula 1, it was confirmed that the crystallization rate improvement effect was significantly reduced compared to Example 26 using the same amount of the nucleating agent of Preparation Example 1.

## Claims

1. A resin composition comprising:
a biodegradable polymer; and
a nucleating agent represented by the following Chemical Formula 1:
[Chemical Formula 1] R-[A-(B)n]ₖ
In Chemical Formula 1,
R is a trivalent or higher linking group derived from a multifunctional monomer,
A is a direct bond; or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 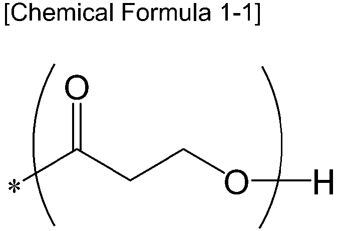 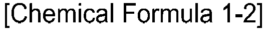 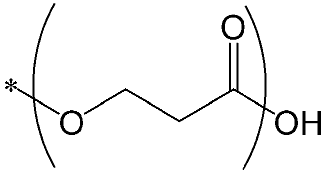
wherein,
* is a position connected to A,
k is an integer of 3 or more,
n is an integer of 1 to 700.

2. The resin composition according to claim 1,
wherein the biodegradable polymer is one or more selected from the group consisting of polylactide; poly(butylene adipate-co-terephthalate); polybutylene succinate; polyhydroxyalkanoate; polylactate-co-3-hydroxypropionate; poly(3-hydroxypropionate)-b-polycaprolactone-b-polylactide; and poly(3-hydroxypropionate)-b-(polycaprolactone-r-lactide).

3. The resin composition according to claim 1 or claim 2,
wherein the biodegradable polymer is polylactide having a weight average molecular weight of 150,000 g/mol to 300,000 g/mol.

4. The resin composition according to any one of claims 1 to 3,
wherein the nucleating agent is included in an amount of 0.1 to 10 parts by weight based on 100 parts by weight of the biodegradable polymer.

5. The resin composition according to any one of claims 1 to 4,
wherein R is a trivalent or higher linking group derived from C₁₋₆₀ alkyl, C₃₋₆₀ cycloalkyl, C₆₋₆₀ aryl, or C₂₋₆₀ heteroaryl containing one or more of N, O, and S, and
at least one of the carbon atoms of the alkyl, cycloalkyl, aryl, and heteroaryl is substituted or unsubstituted with at least one heteroatom selected from the group consisting of N, O, and S, or carbonyl.

6. The resin composition according to any one of claims 1 to 4,
wherein R is a tetravalent or higher linking group derived from a multifunctional monomer, and
k is an integer of 4 or more.

7. The resin composition according to any one of claims 1 to 6,
wherein the nucleating agent is one in which 3-hydroxypropionic acid is condensation polymerization with a multifunctional monomer, or beta-propiolactone is ring-opening polymerization with a multifunctional monomer.

8. The resin composition according to any one of claims 1 to 7,
wherein the multifunctional monomer is one or more selected from the group consisting of glycerol, pentaerythritol, 3-arm-poly(ethylene glycol) (number of ethylene glycol repeating units in each arm is 2 to 15), 4-arm-poly(ethylene glycol) (number of ethylene glycol repeating units in each arm is 2 to 10), di(trimethylolpropane), tripentaerythritol, xylitol, sorbitol, inositol, cholic acid, β-cyclodextrin, tetrahydroxyperylene, 2,2'-bis(hydroxymethyl)butyric acid (BHB), pyridinetetramine (PTA), diethylenetriaminepentaacetic acid, melamine, propane-1,2,3-triamine, tetraacetylenepentaamine, benzene-1,3,5-triamine, toluene-2,4,6-triisocyanate, 2-isocyanatoethyl-2,6-diisocyanatocaproate, triphenylmethane-4,4,4-triisocyanate, trimethylolpropane, triethanolamine, triglycidyl, and s-triazine-1,3,5-triethanol ether.

9. The resin composition according to any one of claims 1 to 7,
wherein the multifunctional monomer is one or more selected from the group consisting of pentaerythritol, 4-arm-poly(ethylene glycol) (number of ethylene glycol repeating units in each arm is 2 to 10), tripentaerythritol, xylitol, sorbitol, and inositol.

10. The resin composition according to any one of claims 1 to 9,
wherein the nucleating agent has a weight average molecular weight of 1,000 g/mol to 100,000 g/mol.

11. The resin composition according to any one of claims 1 to 10,
wherein the nucleating agent has a number average molecular weight of 500 g/mol to 50,000 g/mol.

12. The resin composition according to any one of claims 1 to 11,
wherein the nucleating agent has a polydispersity index of 1.0 to 14.0.

13. The resin composition according to any one of claims 1 to 12,
wherein a rate of increase in half-crystallization time expressed by a formula (t₀-t₁)/t₀*100 is 20% or more, where t₀ is the half-crystallization time of the biodegradable polymer and t₁ is the half-crystallization time of the resin composition.
